# EUROPÄISCHE PATENTSCHRIFT

(11) **EP 4 725 307 B1**
(45) Veröffentlichungstag und Bekanntmachung des Hinweises auf die Patenterteilung: **08.07.2026**
(21) Anmeldenummer: 24205473.2
(22) Anmeldetag: 09.10.2024
(51) Int. Cl.: A01M 1/02, A01M 1/10

(54) **ÜBERWACHEN VON GLIEDERFÜSSERN**
MONITORING ARTHROPODS
SURVEILLANCE D'ANTHROPODES

(43) Veröffentlichungstag der Anmeldung: 15.04.2026
(73) Patentinhaber: Bayer Aktiengesellschaft, 51373 Leverkusen (DE)
(72) Erfinder: BORN, Fabian Christian, 57319 Bad Berleburg (DE); TEMPEL, Matthias, 50935 Köln (DE); KLEINSCHROTH, Lukas, 51371 Leverkusen (DE)
(74) Vertreter: BIP Patents

(56) Entgegenhaltungen:
- WO-A1-2013/079601
- WO-A1-2020/058175
- WO-A1-2023/239794
- US-A1- 2009 153 659

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein computer-implementiertes Verfahren, ein Computersystem und ein Computerprogramm.

### EINLEITUNG

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Nutzpflanzen verursacht.

WO2020/058175A1 offenbart eine Vorrichtung und ein Verfahren zu Erkennen von Gliederfüßern in einer Region, in der Pflanzen wachsen, mit Hilfe einer Kamera.

US2009/153659A1 offenbart ein System und ein Verfahren zur Erkennung und Klassifizierung von Objekten in Bilder, wie zum Beispiel Insekten und andere Gliederfüßer.

WO2023/239794A1 offenbart Systeme und Methoden zur Überwachung von Arthropodenvektoren und zur Erstellung von projektiven oder prädiktiven Modellen.

WO2013/079601A1 offenbart ein System und ein Verfahren zur Überwachung von Pflanzen und/oder eines Befalls von Pflanzen mit Schädlingen während der Lagerung.

In der modernen Landwirtschaft spielt die Erfassung und Erkennung von Schädlingen innerhalb von landwirtschaftlich genutzten Flächen eine wichtige Rolle.

### ZUSAMMENFASSUNG

Diesen und weiteren Aspekten widmet sich die vorliegende Offenbarung.

Ein erster Gegenstand der vorliegenden Offenbarung ist ein computer-implementiertes Verfahren zum Konfigurieren einer Vorrichtung zum Überwachen von Gliederfüßern in einem Bereich, in dem Nutzpflanzen angebaut werden. Das Verfahren umfasst die Schritte:
- Empfangen von Anwendungsinformationen betreffend die Vorrichtung zum Überwachen von Gliederfüßern, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- Konfigurieren der Vorrichtung auf Basis der Anwendungsinformationen, wobei das Konfigurieren der Vorrichtung umfasst: Auswählen eines Modells zum Detektieren, Lokalisieren, Identifizieren und/oder Zählen von Gliederfüßern auf Basis der Anwendungsinformationen.

Ein weiterer Gegenstand der vorliegenden Offenbarung ist ein Computersystem umfassend
- eine Empfangseinheit
- und eine Steuereinheit,
- wobei die Empfangseinheit konfiguriert ist, Anwendungsinformationen betreffend eine Vorrichtung zum Überwachen von Gliederfüßern in einem Bereich, in dem Nutzpflanzen angebaut werden, zu empfangen, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- wobei die Steuereinheit konfiguriert ist, die Vorrichtung auf Basis der Anwendungsinformationen zu konfigurieren und/oder eine Konfiguration der Vorrichtung zu veranlassen, wobei das Konfigurieren der Vorrichtung umfasst: Auswählen eines Modells zum Detektieren, Lokalisieren, Identifizieren und/oder Zählen von Gliederfüßern auf Basis der Anwendungsinformationen.

Ein weiterer Gegenstand der vorliegenden Offenbarung ist ein nicht-flüchtiges computerlesbares Speichermedium, auf dem ein Computerprogramm gespeichert ist, das, wenn es von einem Computersystem ausgeführt wird, das Computersystem veranlasst, folgende Schritte auszuführen:
- Empfangen von Anwendungsinformationen betreffend eine Vorrichtung zum Überwachen von Gliederfüßern in einem Bereich, in dem Nutzpflanzen angebaut werden, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- Konfigurieren der Vorrichtung auf Basis der Anwendungsinformationen, wobei das Konfigurieren der Vorrichtung umfasst: Auswählen eines Modells zum Detektieren, Lokalisieren, Identifizieren und/oder Zählen von Gliederfüßern auf Basis der Anwendungsinformationen.

Weitere Gegenstände finden sich in der ausführlichen Offenbarung und den Zeichnungen.

### KURZE BESCHREIUNG DER ZEICHNUNGEN

Fig. 1 zeigt beispielhaft und schematisch eine Ausführungsform des computerimplementierten Verfahrens der vorliegenden Offenbarung.
Fig. 2 zeigt beispielhaft und schematisch eine Ausführungsform des Computersystems der vorliegenden Offenbarung.

### AUSFÜHRLICHE OFFENBARUNG

Die Gegenstände der vorliegenden Offenbarung werden im Folgenden näher erläutert, ohne zwischen den Gegenständen der vorliegenden Offenbarung (Verfahren, Computersystem, Computerprogramm) zu unterscheiden. Vielmehr sollen die nachfolgenden Ausführungen sinngemäß für alle Gegenstände der Offenbarung gelten, unabhängig davon, in welchem Zusammenhang (Verfahren, Computersystem, Computerprogramm) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Der Artikel "ein" bedeutet "ein oder mehrere"; es sei denn es steht ein "nur" oder "lediglich" davor. Dies gilt analog auch für den Artikel "eine".

Die Ausdrücke "basierend auf" und "auf Basis von" bedeuten "zumindest teilweise basierend auf", sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Ansonsten haben die in dieser Offenbarung verwendeten Begriffe die Bedeutung, die sie im Stand der Technik, insbesondere in dem in dieser Offenbarung angeführten Stand der Technik, haben.

Ein Gegenstand der vorliegenden Offenbarung ist ein computer-implementiertes Verfahren zum Konfigurieren einer Vorrichtung.

Die Vorrichtung ist eine Vorrichtung zum Überwachen von Gliederfüßern in einem Bereich, in dem Nutzpflanzen angebaut werden.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

In einer anderen Ausführungsform der vorliegenden Offenbarung bezieht sich der Begriff "Gliederfüßer" ausschließlich auf Schädlinge für die in dem Bereich angebauten Nutzpflanzen.

Der Begriff "Überwachen" bedeutet üblicherweise, dass mit Hilfe der Vorrichtung der vorliegenden Offenbarung die Anwesenheit eines oder mehrerer Gliederfüßer in einem Bereich, in dem Nutzpflanzen angebaut werden oder werden sollen, festgestellt werden kann.

Der Begriff "Nutzpflanze" bezieht sich auf jede Pflanze, die von Menschen absichtlich für Lebensmittel, Futtermittel, Fasern, Holz, Duftstoffe, medizinische, hygienische und/oder andere wirtschaftliche Zwecke angebaut und kultiviert wird. Diese Pflanzen werden in der Regel speziell ausgewählt und bewirtschaftet, um einen Ertrag oder eine Ernte zu erzielen, und können eine Vielzahl von Arten umfassen, wie z.B. Getreide, Obst, Gemüse, Ölsaaten und Faserpflanzen. Teile der angebauten Pflanzen können für den menschlichen und/oder tierischen Verzehr geeignet sein. Auch Zierpflanzen und Algen fallen unter den Begriff "Nutzpflanze". Der Begriff "Nutzpflanze" umfasst auch Saatgut, das ausgesät wird, um eine Nutzpflanze wachsen zu lassen.

Der Bereich, in dem die Nutzpflanzen angebaut werden, kann ein Feld (z.B. im Freien) oder ein Gewächshaus oder ein Folientunnel oder eine Plantage oder ein sonstiger Bereich sein, in dem Nutzpflanzen angebaut werden (können).

Die Vorrichtung der vorliegenden Offenbarung umfasst eine Fangvorrichtung für Gliederfüßer oder kann mit einer Fangvorrichtung mechanisch verbunden werden.

Die Fangvorrichtung umfasst einen Sammelbereich. Der Sammelbereich ist ein Bereich, der von Gliederfüßern aufgesucht werden kann. Es kann sich dabei um eine ebene Oberfläche einer Tafel oder Karte oder dergleichen handeln. Es kann sich auch um den Boden eines Behälters handeln. Es kann sich auch um eine Flüssigkeit in einem Behälter handeln. Es kann sich auch um einen Teil einer Pflanze handeln, beispielsweise ein Blatt oder eine Frucht oder ein anderer Teil einer Pflanze.

In einer Ausführungsform der vorliegenden Offenbarung umfasst die Fangvorrichtung einen mit einer Flüssigkeit gefüllten Behälter, z.B. eine Fangschale, wie sie in WO2020/058175A1, WO2020/058170A1, WO2021/213824A1 oder WO2022/243150A1 beschrieben ist.

In einer Ausführungsform der vorliegenden Offenbarung umfasst die Fangvorrichtung eine mit einem Klebemittel versehene Oberfläche, wie sie in beispielsweise in WO2023/043871A1, WO2018/131853A1 oder WO2004/095919A2 beschrieben ist. Eine solche Fangvorrichtung wird in dieser Offenbarung auch als Klebefalle bezeichnet.

In einer Ausführungsform der vorliegenden Offenbarung umfasst die Fangvorrichtung einen zeltartigen Rahmen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen. Eine solche Fangvorrichtung ist ein spezieller Typ einer Klebefalle, da solche Delta-Fallen üblicherweise mit einer Karte oder Tafel, die mit einem Klebemittel ausgestattet ist, versehen werden. Dieser spezielle Typ ist dadurch gekennzeichnet, dass die mit dem Klebemittel ausgestattete Karte oder Tafel in ein Gehäuse eingebracht ist, um die Karte oder Tafel vor Umwelteinflüssen (z.B. Niederschlag, Verschmutzung, und ähnlichem) zu schützen. Ansonsten kann eine Klebefalle auch (z.B. nach "oben" hin) offen sein.

Als Lockmittel kann der Sammelbereich in einer Farbe gestaltet sein (z.B. gelb oder rot), die spezifische Gliederfüßer anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Im Falle der Verwendung eines mit einer Flüssigkeit gefüllten Behälters kann dieser mit Wasser und optional mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Die Vorrichtung kann eine (oder auch mehrere) Fangvorrichtung für Gliederfüßer umfassen. Eine solche Fangvorrichtung kann ein integraler Bestandteil der Vorrichtung der vorliegenden Offenbarung sein.

Die Vorrichtung kann aber auch so hergerichtet sein, dass sie mit einer oder mehreren Fangvorrichtungen mechanisch verbunden werden kann. Die Vorrichtung kann Mittel umfassen, mit denen die Vorrichtung mit einer Fangvorrichtung mechanisch verbunden werden kann. In einer Ausführungsform sind Verbindungsmittel für eine reversible mechanische Verbindung der Vorrichtung mit einer Fangvorrichtung vorhanden.

"Reversibel" bedeutet, dass die Verbindung zwischen der Vorrichtung und der Fangvorrichtung wieder gelöst werden kann, ohne dass es erkennbar ist, dass die Vorrichtung und die Fangvorrichtung verbunden waren.

In einer Ausführungsform ist die Vorrichtung so ausgeführt, dass sie mit verschiedenen Typen von Fangvorrichtungen reversibel verbunden werden kann.

In einer Ausführungsform ist die Vorrichtung so ausgeführt, dass sie Verbindungselemente aufweist, die kompatibel zu Verbindungselementen einer Fangschale und einer Klebefalle sind, während die Fangschale und die Klebefalle Verbindungselemente aufweisen, die kompatibel zu den Verbindungselementen der Vorrichtung sind. In einer Ausführungsform sind die Verbindungselemente der Fangschale und der Klebefalle identisch.

"Kompatibel" bedeutet, dass die Verbindungselemente der Vorrichtung mit den Verbindungselementen der Fangschale und der Klebefalle reversibel verbunden werden können, so dass bei einer solchen Verbindung die Vorrichtung und die Fangschale oder die Vorrichtung und die Klebefalle ein System zum Überwachen von Gliederfüßern bilden.

Die Vorrichtung umfasst Mittel zum Erzeugen von Bildaufnahmen. Dabei handelt es sich üblicherweise um eine oder mehrere Kameras.

Eine "Kamera" ist ein Gerät oder System, das dazu bestimmt ist, Bildaufnahmen von Objekten und/oder Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD-(CCD *= charge-coupled device*) oder CMOS-Sensoren (CMOS *= complementary metal-oxidesemiconductor*). Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

Die Kamera kann auf den Sammelbereich der Fangvorrichtung gerichtet werden. Mit anderen Worten: die Kamera kann so ausgerichtet werden, dass sie Bildaufnahmen von dem Sammelbereich oder einem Teil davon erzeugt.

Die Kamera kann dazu verwendet werden, digitale Bildaufnahmen von dem Sammelbereich oder einem Teil davon zu erzeugen. Die erzeugten Bildaufnahmen können verwendet werden, (i) um zu erkennen, ob sich ein oder mehrere Gliederfüßer in dem abgebildeten Sammelbereich befinden (Detektieren von Gliederfüßern), (ii) die Position eines Gliederfüßers in der Bildaufnahme zu bestimmen (Lokalisieren von Gliederfüßern), (iii) Gliederfüßer in dem abgebildeten Sammelbereich zu zählen und/oder (iv) Gliederfüßer zu identifizieren, d.h. festzustellen, um welchen Gliederfüßer (z.B. Unterklasse, Überordnung, Ordnung, Unterordnung, Familie, Gattung, Art, Stadium, Nützling, Schädling) es sich handelt.

Zur Abbildung des Sammelbereichs auf einem oder mehreren Bildsensoren ist eine Lichtquelle erforderlich, mit der der Sammelbereich beleuchtet wird, so dass Licht (elektromagnetische Strahlung im infraroten, sichtbaren und/oder ultravioletten Bereich des elektromagnetischen Spektrums) vom beleuchteten Sammelbereich in Richtung Kamera gestreut/reflektiert wird.

Hierzu kann das Tageslicht verwendet werden.

Die Vorrichtung kann aber auch eine oder mehrere Beleuchtungsquellen umfassen. Eine solche Beleuchtungseinheit sorgt für eine definierte, vom Tageslicht unabhängige Beleuchtung. Eine solche Beleuchtungseinheit kann beispielsweise seitlich neben der Kamera angebracht sein und den Sammelbereich von dort beleuchten, so dass es zu keinem Schattenwurf der Kamera auf den Sammelbereich kommt.

Es ist auch denkbar, eine Beleuchtungsquelle unterhalb des Sammelbereichs und/oder neben dem Sammelbereich zu positionieren, die den Sammelbereich "von unten" und/oder "von der Seite" beleuchtet, während eine Kamera eine oder mehrere Bildaufnahmen "von oben" erzeugt.

Es ist denkbar, dass mehrere Beleuchtungsquellen den Sammelbereich aus unterschiedlichen Richtungen beleuchten.

Die Begriffe "Licht" und "Beleuchtung" sollen im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) und/oder oberhalb von 780 nm (infrarotes Licht: 780 nm bis 1000 µm) verwendet wird. Der Bildsensor und die optischen Elemente der Kamera sind üblicherweise an die verwendete elektromagnetische Strahlung angepasst.

Die Vorrichtung umfasst eine Steuer- und Berechnungseinheit.

Die Steuer- und Berechnungseinheit dient der Steuerung der elektrischen/elektronischen Komponenten der Vorrichtung und zur Koordinierung der Datenflüsse zwischen verschiedenen Komponenten der Vorrichtung.

Die Steuer- und Berechnungseinheit umfasst üblicherweise eine Prozessoreinheit, einen Programmspeicher und einen Arbeitsspeicher. Die Steuer- und Berechnungseinheit kann ferner einen nicht-flüchtigen Datenspeicher umfassen, der beispielsweise als Halbleiterspeicher ausgeführt ist, und der zum Beispiel zum Speichern von Bildaufnahmen, Messwerten, Analysemodellen, Computerprogrammen (Software) und/oder von Ergebnissen von Analysen dienen kann.

Die Steuer- und Berechnungseinheit kann konfiguriert sein, mit Hilfe der Kamera Bildaufnahmen vom Sammelbereich zu erzeugen. Die Steuer- und Berechnungseinheit kann konfiguriert sein, die Kamera zu veranlassen, Bildaufnahmen vom Sammelbereich zu erzeugen. Die Steuer- und Berechnungseinheit kann konfiguriert sein, die Kamera zu definierten Zeitpunkten und/oder in definierten Zeitabständen und/oder bei Eintreten definierter Ereignisse zu veranlassen, eine oder mehrere Bildaufnahmen vom Sammelbereich zu erzeugen. Die Steuer- und Berechnungseinheit kann konfiguriert sein, Bildaufnahmen, Messwerte, Analysenergebnisse, Geokoordinaten und/oder andere Informationen mit Hilfe einer Sendeeinheit an ein separates Computersystem zu übermitteln. Die Steuer- und Berechnungseinheit kann konfiguriert sein, Bildaufnahmen von der Kamera zu empfangen und/oder Bildaufnahmen von der Kamera abzurufen und/oder Bildaufnahmen aus einem Datenspeicher, der ein Bestandteil der Vorrichtung sein kann, auszulesen. Die Steuer- und Berechnungseinheit kann konfiguriert sein, mit Hilfe einer Empfangseinheit Daten und/oder Befehle und/oder Softwareupdates zu empfangen.

Die Steuereinheit kann konfiguriert sein, in Bildaufnahmen abgebildete Gliederfüßer zu detektieren, zu lokalisieren, zu zählen und/oder zu identifizieren.

Das Detektieren, Lokalisieren, Zählen und/oder Identifizieren von Gliederfüßern in Bildaufnahmen des Sammelbereichs kann beispielsweise mit Hilfe eines trainierten Modells des maschinellen Lernens erfolgen.

Ein solches "Modell des maschinellen Lernens" kann als eine computerimplementierte Datenverarbeitungsarchitektur verstanden werden. Das Modell kann Eingabedaten empfangen und Ausgabedaten auf der Grundlage dieser Eingabedaten und Modellparametern liefern. Das Modell kann durch Training eine Beziehung zwischen den Eingabedaten und den Ausgabedaten erlernen. Beim Training können Modellparameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten verglichen. Modellparameter werden so verändert, dass die Abweichungen zwischen den Ausgabedaten und den Zieldaten auf ein (definiertes) Minimum reduziert werden. Zur Modifizierung der Modellparameter im Hinblick auf eine Reduzierung der Abweichungen kann ein Optimierungsverfahren wie beispielsweise ein Gradientenverfahren verwendet werden.

Die Abweichungen können mit Hilfe einer Fehlerfunktion (engl.: *loss function*) quantifiziert werden. Eine solche Fehlerfunktion kann verwendet werden, um einen Fehler (engl.: *loss*) für ein gegebenes Paar von Ausgabedaten und Zieldaten zu berechnen. Das Ziel des Trainingsprozesses kann darin bestehen, die Parameter des Modells des maschinellen Lernens so zu verändern (anzupassen), dass der Fehler für alle Paare des Trainingsdatensatzes auf ein (definiertes) Minimum reduziert wird.

Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Fehler bedeuten, dass ein oder mehrere Modellparameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder eine andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z.B. eine elementweise Differenzmetrik verwendet werden. Alternativ oder zusätzlich können die Ausgabedaten vor der Berechnung eines Fehlerwertes transformiert werden, z.B. in einen eindimensionalen Vektor.

Das Training kann beendet werden, wenn ein Stopp-Kriterium erfüllt ist. Ein solches Stoppkriterium kann beispielsweise sein: eine vordefinierte maximale Anzahl von Trainingsschritten/-zyklen/-epochen wurde durchgeführt, Abweichungen zwischen Ausgabedaten und Zieldaten können nicht mehr durch Änderung der Modellparameter reduziert werden und/oder ein vorab festgelegtes Minimum der Fehlerfunktion wurde erreicht.

Ein Modell des maschinellen Lernens, das konfiguriert ist, Gliederfüßer in einer Bildaufnahme zu detektieren, kann beispielsweise anhand einer Vielzahl an Bildaufnahmen trainiert werden, in denen Sammelbereiche mit und ohne Gliederfüßer abgebildet sind. Die Trainingsdaten umfassen also neben den Bildaufnahmen Informationen darüber, ob in den jeweiligen Bildaufnahmen ein Gliederfüßer abgebildet ist oder nicht. Diese Informationen können beim Trainieren des Modells als Zieldaten verwendet werden. Die Bildaufnahmen können dem Modell des maschinellen Lernens nacheinander zugeführt werden und das Modell kann für jede Bildaufnahme eine Ausgabe erzeugen, die angibt, ob in der Bildaufnahme ein Gliederfüßer vorhanden ist oder nicht. Die Ausgabe kann mit den Zieldaten verglichen werden. Abweichungen können durch Modifizieren von Modellparametern reduziert werden.

Ein Modell des maschinellen Lernens, das konfiguriert ist, Gliederfüßer in einer Bildaufnahme zu identifizieren, kann beispielsweise anhand einer Vielzahl an Bildaufnahmen trainiert werden, in denen Sammelbereiche mit spezifischen Gliederfüßern abgebildet sind. Die Trainingsdaten umfassen also neben den Bildaufnahmen Informationen darüber, welche spezifischen Gliederfüßer in den jeweiligen Bildaufnahmen abgebildet sind. Diese Informationen können beim Trainieren des Modells als Zieldaten verwendet werden. Die Bildaufnahmen können dem Modell des maschinellen Lernens nacheinander zugeführt werden und das Modell kann für jede Bildaufnahme eine Ausgabe erzeugen, die angibt, welcher spezifische Gliederfüßer in der Bildaufnahme vorhanden ist. Die Ausgabe kann mit den Zieldaten verglichen werden. Abweichungen können durch Modifizieren von Modellparametern reduziert werden.

Ein Modell des maschinellen Lernens, das konfiguriert ist, Gliederfüßer in einer Bildaufnahme zu lokalisieren, kann beispielsweise anhand einer Vielzahl an Bildaufnahmen trainiert werden, in denen Sammelbereiche mit Gliederfüßern abgebildet sind. Zu jeder Bildaufnahme existiert eine Information, die angibt, wo in der Bildaufnahme ein Gliederfüßer abgebildet ist. Diese Informationen können beim Trainieren des Modells als Zieldaten verwendet werden. Die Bildaufnahmen können dem Modell des maschinellen Lernens nacheinander zugeführt werden und das Modell kann für jede Bildaufnahme eine Ausgabe erzeugen, die angibt, wo ein Gliederfüßer in der Bildaufnahme abgebildet ist. Die Ausgabe kann mit den Zieldaten verglichen werden. Abweichungen können durch Modifizieren von Modellparametern reduziert werden.

Ein Modell des maschinellen Lernens, das konfiguriert ist, Gliederfüßer in einer Bildaufnahme zu zählen, kann beispielsweise anhand einer Vielzahl an Bildaufnahmen trainiert werden, in denen Sammelbereiche mit Gliederfüßern abgebildet sind. Zu jeder Bildaufnahme kann eine zweite Bildaufnahme existieren, in der ein Gliederfüßer z.B. mittels eines Begrenzungsrahmens (engl. *bounding box*) markiert ist. Diese Informationen können beim Trainieren des Modells als Zieldaten verwendet werden. Alternativ können die Koordinaten der Begrenzungsrahmen als Zieldaten verwendet werden. Die Bildaufnahmen ohne Begrenzungsrahmen können dem Modell des maschinellen Lernens nacheinander zugeführt werden und das Modell kann trainiert werden, Begrenzungsrahmen zu erzeugen und/oder die Koordinaten von Begrenzungsrahmen vorherzusagen. Die Ausgabe kann mit den Zieldaten verglichen werden. Abweichungen können durch Modifizieren von Modellparametern reduziert werden. Ist das Modell trainiert, dann gibt die Zahl der Begrenzungsrahmen, die von dem trainierten Modell erzeugt oder vorhergesagt werden, die Zahl der in der Bildaufnahme abgebildeten Gliederfüßer an.

Die hier beschriebenen Verfahren zum Trainieren von Modellen des maschinellen Lernens sind lediglich Beispiele. Es gibt zahlreiche weitere Verfahren und Varianten (siehe z.B.: D. C. K. Amarathunga et al.: Methods of Insect Image Capture and Classification: A Systematic Literature Review, Smart Agricultural Technology, Volume 1, 2021, 100023; C. Zhu et al.: Insect Identification and Counting in Stored Grain: Image Processing Approach and Application Embedded in Smartphones, Mob. Inf. Syst. 2018, 5491706:1-5, WO2020058175A1, WO2020058170A1).

Die Vorrichtung weist Mittel zur Energieversorgung auf. Die Vorrichtung ist für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemische Zellen, Akkumulatoren, Solarzellen, Brennstoffzellen und/oder Generatoren (z.B. in Kombination mit einem Windrad).

In einer Ausführungsform umfasst die Vorrichtung eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

Die Vorrichtung kann eine Sendeeinheit umfassen, um Informationen über ein Netzwerk an ein separates Computersystem zu übermitteln. Diese Informationen können beispielsweise Bildaufnahmen des Sammelbereichs sein. Diese Informationen können Ergebnisse einer Analyse einer Bildaufnahme sein, zum Beispiel die Zahl der in einer Bildaufnahme abgebildeten Gliederfüßer, identifizierte Spezies und/oder Mitteilungen zum Status der Vorrichtung.

Die Sendeeinheit kann so ausgestaltet sein, dass sie Informationen über ein Mobilfunknetz (z.B. GSM: *Global System for Mobile Communications,* GPRS: *General Packet Radio Service;* UMTS: *Universal Mobile Telecommunications System,* LTE: *Long Term Evolution*), über ein WLAN (*Wireless Local Artea Network*), über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Die Vorrichtung kann eine Empfangseinheit umfassen, um Informationen über ein Netzwerk zu empfangen. Diese Informationen können Softwareupdates, Statusabfragen, Anwendungsinformationen, Konfigurationsinformationen und/oder andere/weitere Informationen sein.

Die Empfangseinheit kann so ausgestaltet sein, dass sie Informationen über ein Mobilfunknetz empfängt.

Die Sendeeinheit und die Empfangseinheit können Bestandteile einer Sende- und Empfangseinheit sein.

In einer Ausführungsform der vorliegenden Offenbarung umfasst die Vorrichtung eine Sende- und Empfangseinheit, mit der Informationen über ein GSM-, GPRS-, 2G-, 3G-, LTE-, 4G-, 5G-, 6G-Mobilfunknetzwerk oder über ein anderes Mobilfunknetzwerk empfangen und versendet werden können.

In einer Ausführungsform der vorliegenden Offenbarung kann die Vorrichtung an verschiedene Anwendungsfälle angepasst werden. Das Anpassen der Vorrichtung an einen Anwendungsfall wird in dieser Beschreibung auch als "Konfigurieren" oder "Konfiguration" bezeichnet.

Durch das Konfigurieren der Vorrichtung kann die Vorrichtung hergerichtet werden, um spezifische Gliederfüßer zu überwachen, also z.B. zu detektieren, zu lokalisieren, zu identifizieren und/oder zu zählen.

Durch das Konfigurieren der Vorrichtung kann die Vorrichtung hergerichtet werden, um Gliederfüßer in einem spezifischen Bereich zu überwachen.

Durch das Konfigurieren der Vorrichtung kann die Vorrichtung hergerichtet werden, um Gliederfüßer unter spezifischen Bedingungen zu überwachen.

Durch das Konfigurieren der Vorrichtung kann die Vorrichtung hergerichtet werden, um Gliederfüßer unter Verwendung einer spezifischen Fangvorrichtung zu überwachen.

Das Konfigurieren erfolgt auf Basis von Anwendungsinformationen. Die Anwendungsinformationen spezifizieren den Anwendungsfall. Die Anwendungsinformationen können die Nutzpflanzen spezifizieren, die in dem Bereich angebaut werden, in dem die Vorrichtung genutzt wird oder werden soll. Die Anwendungsinformationen können den Bereich spezifizieren, in dem die Vorrichtung genutzt wird oder werden soll. Die Anwendungsinformationen können die Gliederfüßer spezifizieren, die mit Hilfe der Vorrichtung überwacht werden sollen. Die Anwendungsinformationen können die Fangvorrichtung spezifizieren, die verwendet wird, um Gliederfüßer zu überwachen.

In einer Ausführungsform der vorliegenden Offenbarung umfassen die Anwendungsinformationen Gliederfüßerinformationen. Die Gliederfüßerinformationen spezifizieren die Gliederfüßer, die überwacht werden sollen. Mit anderen Worten: die Gliederfüßerinformationen spezifizieren die Gliederfüßer, die in dem Bereich, in dem die Nutzpflanzen angebaut werden oder werden wollen, üblicherweise auftreten. Mit anderen Worten: die Gliederfüßerinformationen spezifizieren die Gliederfüßer, die in dem Bereich erwartet werden oder werden können. Mit anderen Worten: die Gliederfüßerinformationen spezifizieren die Gliederfüßer, die in dem Sammelbereich der Fangvorrichtung erwartet werden oder werden können. Mit anderen Worten: die Gliederfüßerinformationen spezifizieren die Gliederfüßer, die in den Bildaufnahmen des Sammelbereichs abgebildet werden oder werden können.

Die Gliederfüßerinformationen können spezifizieren, welcher Unterklasse, Überordnung, Ordnung, Unterordnung, Familie, Gattung und/oder Art die (zu erwartenden) Gliederfüßer angehören.

Die Gliederfüßerinformationen können spezifizieren, in welchem Entwicklungsstadium sich die (zu erwartenden) Gliederfüßer befinden.

Anhand der Gliederfüßerinformationen kann ein Modell zum Detektieren, Lokalisieren, Identifizieren und/oder Zählen von Gliederfüßern in Bildaufnahmen des Sammelbereichs ausgewählt werden.

Es ist möglich, dass verschiedene Modelle vorliegen, die auf Basis unterschiedlicher Trainingsdaten trainiert wurden. Es ist möglich, dass verschiedene Modelle auf Basis von Bildaufnahmen trainiert wurden, die unterschiedliche Gliederfüßer zeigen. Es kann dasjenige Modell ausgewählt werden, bei dem die Trainingsdaten Bildaufnahmen von den spezifizierten Gliederfüßern umfassten.

Anhand der Gliederfüßerinformationen kann festgelegt werden, wann und/oder wie häufig die Kamera der Vorrichtung Bildaufnahmen vom Sammelbereich erzeugt.

Es gibt Gliederfüßer, die bevorzugt zu bestimmten Tages- oder Nachzeiten in Erscheinung treten. Die Kamera kann konfiguriert werden, zu solchen Zeiten Bildaufnahmen und/oder eine größere Zahl an Bildaufnahmen zu erzeugen, in denen die spezifizierten Gliederfüßer üblicherweise in Erscheinung treten.

Anhand der Gliederfüßerinformationen kann die Auflösung der Bildaufnahmen festgelegt werden. Die Auflösung der Bildaufnahmen kann an die spezifizierten Gliederfüßer angepasst werden. So kann beispielsweise für größere Gliederfüßer eine geringere Auflösung festgelegt werden als für kleine Gliederfüßer.

Anhand der Gliederfüßerinformationen kann festgelegt werden, ob und/oder wie der Sammelbereich beleuchtet wird.

Anhand der Gliederfüßerinformationen kann festgelegt werden, mit welcher Intensität der Sammelbereichs beleuchtet wird.

Anhand der Gliederfüßerinformationen kann festgelegt werden, welcher Spektralbereich zum Beleuchten des Sammelbereichs verwendet wird. Der Spektralbereich, d.h. der Wellenlängenbereich der von der Beleuchtungseinheit emittierten elektromagnetischen Strahlung kann an die spezifizierten Gliederfüßer angepasst werden. Es ist denkbar, dass dunkle, schwarz erscheinende Gliederfüßer in einem anderen Spektralbereich besser zu erkennen sind, als helle und/oder weiß erscheinende oder grün erscheinende oder braun erscheinende Gliederfüßer.

Anhand der Gliederfüßerinformationen kann also festgelegt werden, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden.

Neben der Ausleuchtung des Sammelbereichs können ein oder mehrere Beleuchtungseinheiten auch zum Anlocken spezifischer Gliederfüßer verwendet werden. Auch hier kann eine entsprechende Konfiguration der Beleuchtung auf Basis der Gliederfüßerinformationen erfolgen.

Die zu überwachenden Gliederfüßer können auch indirekt anhand der angebauten / anzubauenden Nutzpflanzen, anhand des Bereichs, in dem die Nutzpflanzen angebaut werden und/oder anhand der verwendeten Fangvorrichtung spezifiziert werden.

In einer Ausführungsform der vorliegenden Offenbarung umfassen die Anwendungsinformationen Nutzpflanzeninformationen. Die Nutzpflanzeninformationen können angeben, welche Nutzpflanze in dem Bereich angebaut wird. Aus der Nutzpflanze kann abgeleitet werden, mit welchen Gliederfüßern in dem Sammelbereich zu rechnen ist, nämlich diejenigen Gliederfüßer, die beim Anbau der Nutzpflanze üblicherweise in Erscheinung treten. Dabei kann es sich z.B. um Schädlinge für die Nutzpflanze handeln. Ein Nutzer kann daran interessiert sein zu erfahren, ob in dem Bereich, in dem der Nutzer die Nutzpflanze anbaut, solche Schädlinge in Erscheinung treten. Falls mittels der Vorrichtung der vorliegenden Offenbarung das Vorhandensein solcher Schädling in dem Bereich nachgewiesen wird, kann der Nutzer Maßnahmen zum Bekämpfen der Schädlinge ergreifen.

Die Nutzpflanzeninformationen können spezifizieren, welcher Unterklasse, Überordnung, Ordnung, Unterordnung, Familie, Gattung und/oder Art die in dem Bereich angebaute Nutzpflanze angehört.

Die Nutzpflanzeninformationen können spezifizieren, in welchem Entwicklungsstadium sich die Nutzpflanze befindet.

Anhand der Nutzpflanzeninformationen kann ein Modell zum Detektieren, Lokalisieren, Identifizieren und/oder Zählen von Gliederfüßern in Bildaufnahmen des Sammelbereichs ausgewählt werden.

Anhand der Nutzpflanzeninformationen kann festgelegt werden, wann und/oder wie häufig die Kamera der Vorrichtung Bildaufnahmen vom Sammelbereich erzeugt.

Anhand der Nutzpflanzeninformationen kann die Auflösung der Bildaufnahmen festgelegt werden.

Anhand der Nutzpflanzeninformationen kann festgelegt werden, ob und/oder wie der Sammelbereich beleuchtet wird.

Anhand der Nutzpflanzeninformationen kann festgelegt werden, mit welcher Intensität der Sammelbereichs beleuchtet wird.

Anhand der Nutzpflanzeninformationen kann festgelegt werden, welcher Spektralbereich zum Beleuchten des Sammelbereichs verwendet wird.

Anhand der Nutzpflanzeninformation kann festgelegt werden, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden.

In einer Ausführungsform der vorliegenden Offenbarung umfassen die Anwendungsinformationen Fangvorrichtungsinformationen.

Fangvorrichtungsinformationen können spezifizieren, ob die Fangvorrichtung mit einem Lockmittel (z.B. einem Pheromon) ausgestattet ist und/oder mit welchem Lockmittel die Fangvorrichtung ausgestattet ist. Durch die Spezifizierung des Lockmittels lässt sich ableiten, welche Gliederfüßer im Sammelbereich erwartet werden können, nämlich diejenigen Gliederfüßer, die von dem Lockmittel angelockt werden. Fangvorrichtungsinformationen können spezifizieren, in welcher Farbe der Sammelbereich gestaltet ist. Die Farbe des Sammelbereichs kann als ein Lockmittel zum Anlocken von spezifischen Gliederfüßern wirken und kann damit einen Einfluss darauf nehmen, welche Gliederfüßer in den Sammelbereich gelangen. Lockmittel können einen Einfluss darauf haben, wie häufig Gliederfüßer in den Sammelbereich gelangen und/oder wie viele Gliederfüßer in einer definierten Zeitspanne (z.B. pro Tag oder pro Woche) in den Sammelbereich gelangen, da Lockmittel die Gliederfüßer gezielt in den Sammelbereich locken. Die Farbe des Sammelbereichs kann zudem einen Einfluss auf die Abbildung und/oder Erscheinung von Gliederfüßern in einer Bildaufnahme des Sammelbereichs haben.

Damit können anhand der Fangvorrichtungsinformationen
- ein oder mehrere Modelle zum Detektieren, Lokalisieren, Identifizieren und/oder Zählen von Gliederfüßern in Bildaufnahmen des Sammelbereichs ausgewählt werden,
- festgelegt werden, wann und/oder wie häufig die Kamera der Vorrichtung Bildaufnahmen vom Sammelbereich erzeugt,
- die Auflösung der Bildaufnahmen festgelegt werden,
- festgelegt werden, ob und/oder wie der Sammelbereich beleuchtet wird,
- festgelegt werden, mit welcher Intensität der Sammelbereich beleuchtet wird,
- festgelegt werden, welcher Spektralbereich zum Beleuchten des Sammelbereichs verwendet wird,
- festgelegt werden, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden,
- Kameraparameter festgelegt werden, und/oder
- Wartungs- und/oder Reinigungsintervalle festgelegt werden.

Fangvorrichtungsinformationen können spezifizieren, welche Art von Fangvorrichtung verwendet wird. Die Art der Fangvorrichtung kann angeben, ob es sich um eine Klebefalle handelt, ob es sich um eine mit einer Flüssigkeit gefüllten Fangschale handelt, wie weit der Sammelbereich von dem Bildsensor der Kamera und/oder von einem Kameraobjektiv entfernt ist, wie groß der Sammelbereich ist und/oder welche Form der Sammelbereich hat.

Es ist möglich, dass die Kamera der Vorrichtung an die jeweilige Fangvorrichtung angepasst werden muss oder sollte. Es ist möglich, dass bei verschiedenen Fangvorrichtungen, verschiedene Abstände zwischen dem Bildsensor der Kamera und dem Sammelbereich aufweisen und die Fokussierung an den jeweiligen Abstand angepasst werden muss/sollte. Es ist möglich, dass die Art der Fokussierung (z.B. Autofokus oder Festbrennweite) an die Fangvorrichtung angepasst werden muss/oder sollte. Es ist möglich, dass bei einer mit Wasser gefüllten Fangschale eine andere Art der Fokussierung zu einem besseren Ergebnis (z.B. schärfer abgebildete Gliederfüßer) führt als die Fokussierung bei einer Klebefalle. Es ist möglich, dass die Größe und/oder Form des Sammelbereichs bei verschiedenen Fangvorrichtungen unterschiedlich ist und der mit der Kamera erfasste Bereich angepasst werden muss oder sollte.

Anhand der Fangvorrichtungsinformationen kann also die Fokussierung und/oder die Art der Fokussierung der Kamera festgelegt werden. Anhand der Fangvorrichtungsinformationen kann die Größe des von der Kamera erfassten Sammelbereichs festgelegt werden. Ebenso können weitere Parameter der Kamera anhand der Fangvorrichtungsinformationen festgelegt werden, um eine Abbildung von Gliederfüßern zu erzeugen, die ein automatisches Detektieren, Lokalisieren, Identifizieren und/oder Zählen der Gliederfüßer ermöglichen und/oder verbessern. Solche Kameraparameter sind beispielsweise Belichtungszeit, Blende, ISO-Wert, Weißabgleich, Belichtungskorrektur, Bildformat, Motivmodus und/oder Bildstabilisator.

Es ist möglich, dass die Beleuchtungseinheit an die jeweilige Fangvorrichtung angepasst werden muss oder sollte. Es ist möglich, dass eine oder mehrere Beleuchtungseinheiten vorhanden sind, die elektromagnetische Strahlung unterschiedlicher Spektralbereiche emittieren. Es ist möglich, dass der Spektralbereich und/oder die Intensität der elektromagnetischen Strahlung an die Farbe des Sammelbereichs angepasst werden kann oder sollte, z.B. um einen hohen Kontrast zwischen den Gliederfüßern in dem umgebenden Bereich zu erzeugen.

Anhand der Fangvorrichtungsinformationen kann also die Art der Beleuchtung, die Intensität der Beleuchtung und/oder der Spektralbereich der Beleuchtung festgelegt werden.

Die Art der Fangvorrichtung kann einen Einfluss darauf haben, wie sehr der Sammelbereich Umwelteinflüssen ausgesetzt ist. Die Art der Fangvorrichtung kann einen Einfluss darauf haben, wie schnell und/oder stark der Sammelbereich verschmutzt. Eine nach oben offene Klebefalle wird schneller und/oder stärker verschmutzen als eine Deltafalle. Ein mit einem Klebemittel versehener Sammelbereich wird schneller und/oder stärker verschmutzen als ein Sammelbereich ohne Klebemittel. Die Art der Flüssigkeit in einer Fangschale kann einen Einfluss auf die Art, Stärke und Schnelligkeit der Verschmutzung haben. Eine Flüssigkeit, der ein Mittel gegen Algenbildung zugesetzt ist, wird weniger stark und/oder weniger schnell durch Algen befallen, als eine Flüssigkeit ohne ein Mittel gegen Algenbildung. Anhand der Fangvorrichtungsinformationen kann also ein Wartungs- und/oder Reinigungsintervall festgelegt werden. Die Vorrichtung kann konfiguriert sein, bei oder kurz vor Ablauf eines Wartungs- und/oder Reinigungsintervall eine Mitteilung über eine anstehende Reinigung an ein separates Computersystem zu übermitteln. Die Vorrichtung kann konfiguriert sein, bei Ablauf eines Wartungs- und/oder Reinigungsintervall den Sammelbereich selbst zu reinigen.

In einer Ausführungsform der vorliegenden Offenbarung umfassen die Anwendungsinformationen Bereichsinformationen. Die Bereichsinformationen können spezifizieren, in welchem Bereich die Nutzpflanzen angebaut werden (z.B. im Freien, im Gewächshaus, in einem Folientunnel). Der Bereich kann einen Einfluss darauf haben, welche Gliederfüßer in dem Bereich in Erscheinung treten und/oder wie viele Gliederfüßer pro Zeiteinheit (z.B. pro Tag oder pro Woche) in den Bereich bzw. in den Sammelbereich gelangen. Der Bereich kann einen Einfluss darauf haben, welchen Umwelteinflüssen die Vorrichtung ausgesetzt ist. Der Bereich kann einen Einfluss darauf haben, wie stark und/oder schnell der Sammelbereich verschmutzt.

Anhand der Bereichsinformationen können
- ein oder mehrere Modelle zum Detektieren, Lokalisieren, Identifizieren und/oder Zählen von Gliederfüßern in Bildaufnahmen des Sammelbereichs ausgewählt werden,
- festgelegt werden, wann und/oder wie häufig die Kamera der Vorrichtung Bildaufnahmen vom Sammelbereich erzeugt,
- die Auflösung der Bildaufnahmen festgelegt werden,
- festgelegt werden, ob und/oder wie der Sammelbereich beleuchtet wird,
- festgelegt werden, mit welcher Intensität der Sammelbereich beleuchtet wird,
- festgelegt werden, welcher Spektralbereich zum Beleuchten des Sammelbereichs verwendet wird,
- festgelegt werden, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden,
- Kameraparameter festgelegt werden, und/oder
- Wartungs- und/oder Reinigungsintervalle festgelegt werden.

Die Anwendungsinformationen können von einem Nutzer über Eingabemittel (z.B. eine Tastatur, eine Computermaus, ein Mikrofon) in die Vorrichtung eingegeben werden.

Die Vorrichtung kann konfiguriert sein, sich selbst anhand der Anwendungsinformationen zu konfigurieren.

Ebenso ist es denkbar, dass die Vorrichtung ganz oder teilweise durch ein separates Computersystem konfiguriert wird.

Es ist möglich, dass die Vorrichtung mit dem separaten Computersystem verbunden ist und das Computersystem die Vorrichtung anhand der Anwendungsinformationen konfiguriert. Die Verbindung kann über ein Kabel hergestellt werden. Die Verbindung kann über Funk, z.B. über ein Mobilfunknetzwerk, hergestellt werden. In einem solchen Fall müssen die Anwendungsinformationen in das separate Computersystem gelangen. Es ist möglich, dass der Nutzer die Anwendungsinformationen in das separate Computersystem eingibt. Es ist auch möglich, dass der Nutzer die Anwendungsinformationen in ein erstes Computersystem eingibt und die Anwendungsinformationen und/oder aus den Anwendungsinformationen abgeleitete Konfigurationsinformationen von dem ersten Computersystem an ein zweites Computersystem übermittelt werden, das konfiguriert ist, die Vorrichtung zu konfigurieren.

Die Konfiguration der Vorrichtung kann durch ein Softwareupdate und/oder ein Update von Softwareparametern erfolgen.

Es ist möglich, dass ein separates Computersystem (z.B. das zuvor beschriebene zweite Computersystem) die Vorrichtung veranlasst, die Konfiguration ganz oder teilweise vorzunehmen.

Die Anwendungsinformationen können ganz oder teilweise automatisch ermittelt werden. "Automatisch" bedeutet ohne Zutun eines Menschen. Es ist möglich, dass die Vorrichtung konfiguriert ist zu erkennen, welche Fangvorrichtung vorliegt. Es ist zum Beispiel möglich, dass Fangvorrichtung und Vorrichtung zwei separate Einheiten sind, die miteinander mechanisch verbunden werden können, um ein System zum Überwachen von Gliederfüßern zu bilden. Es ist möglich, dass die Fangvorrichtung und die Vorrichtung über Verbindungsmittel verfügen, die eine solche mechanische Verbindung ermöglichen. Es ist möglich, dass die Verbindungsmittel elektrische Kontakte aufweisen. Es ist möglich, dass bei einer mechanischen Verbindung der Vorrichtung mit einer Fangvorrichtung ein elektrischer Kontakt zwischen der Vorrichtung und der Fangvorrichtung hergestellt wird. Es ist möglich, dass die Vorrichtung konfiguriert ist, mittels des elektrischen Kontakts zu erkennen, mit welcher Art von Fangvorrichtung die Vorrichtung verbunden ist.

Für eine solche Erkennung gibt es zahlreiche Möglichkeiten.

Bei der Widerstandcodierung haben verschiedene Arten von Fangvorrichtungen verschiedene elektrische Widerstände. Die Vorrichtung misst als Erkennungskomponente den Widerstand, um festzustellen, mit welcher Fangvorrichtung sie verbunden ist.

An den elektrischen Kontakten verschiedener Fangvorrichtungen können Kondensatoren mit unterschiedlichen Kapazitätswerten angeschlossen sein. Beim Anschließen misst die Vorrichtung die Kapazität, ähnlich wie bei der Widerstandscodierungsmethode, um die Fangvorrichtung zu identifizieren.

Durch die Gestaltung der mechanischen Verbindung mit einer eindeutigen Konfiguration von Pins und Kontakten (z.B. unterschiedliche Anzahl von Pins, unterschiedliche Pin-Anordnungen und/oder Verwendung von Pins unterschiedlicher Länge) kann die Vorrichtung den Typ der angeschlossenen Fangvorrichtung anhand der Pins, die Kontakt herstellen, bestimmen.

Es ist auch möglich, dass Fangvorrichtungen einen RFID-Transponder umfassen (RFID: *radiofrequency identification*)*.* Der RFID-Transponder kann aktiv sein (d.h. eine Quelle für elektrische Energie umfassen). In einer Ausführungsform der vorliegenden Offenbarung ist der RFID-Transponder passiv, d.h. er besitzt keine eigene Quelle für elektrische Energie, sondern wird über Induktion von der Vorrichtung mit elektrischer Energie versorgt. Die Vorrichtung kann konfiguriert sein, zu vordefinierten Zeitpunkten und/oder in vordefinierten Zeitabständen und/oder bei Eintreten definierter Ereignisse den RFID-Transponder auszulesen und damit festzustellen, um welche Fangvorrichtung es sich handelt. Die Art der Fangvorrichtung kann in einem Datenspeicher des RFID-Transponders als Information gespeichert sein.

Ebenso ist es möglich, dass die Vorrichtung und die Fangvorrichtung in verbundenem Zustand über digitale Kommunikationsprotokolle, wie beispielsweise I2C, SPI oder UART, Daten austauschen. Dabei kein eine Komponente (z.B. die Fangvorrichtung) einen eindeutigen Identifizierungscode an die andere Komonente (z.B. die Vorrichtung) senden.

Ebenso ist es möglich ein optisches Erkennungssystem zu integrieren. Wenn die Komponenten verbunden werden, kann ein optischer Marker (z.B. ein QR-Code oder Barcode) auf der Fangvorrichtung von einem optischen Sensor der Vorrichtung (z.B. der Kamera) gelesen werden. Der optische Marker kann z.B. in dem Sammelbereich angebracht sein.

Anhand der automatisch ermittelten Fangvorrichtungsinformationen kann die Vorrichtung sich selbst konfigurieren. Ebenso ist es möglich, dass die Vorrichtung konfiguriert ist, die automatisch ermittelten Fangvorrichtungsinformationen an ein separates Computersystem zu übermitteln, das die Konfiguration der Vorrichtung vornimmt.

Die Farbe und/oder Form und/oder Größe des Sammelbereichs kann aus einer Bildaufnahme des Sammelbereichs automatisch bestimmt werden. Die Vorrichtung kann konfiguriert sein, eine erste Bildaufnahme von dem Sammelbereich zu erzeugen. Die Vorrichtung kann beispielsweise konfiguriert sein, eine solche erste Bildaufnahme dann zu erzeugen, wenn die Vorrichtung mit einer Fangvorrichtung verbunden wurde und/oder erstmalig eingeschaltet wurde. Die Vorrichtung kann konfiguriert sein, die erste Bildaufnahme zu analysieren und die Farbe und/oder Form und/oder Größe des Sammelbereichs zu ermitteln. Die Vorrichtung kann konfiguriert sein, sich selbst automatisch anhand der Farbe und/oder Form und/oder Größe des Sammelbereichs zu konfigurieren. Die Vorrichtung kann konfiguriert sein, die erste Bildaufnahme und/oder die automatisch ermittelten Fangvorrichtungsinformationen an ein separates Computersystem zu übermitteln. Das separate Computersystem kann konfiguriert sein, die erste Bildaufnahme zu analysieren, um die Farbe und/oder Form und/oder Größe des Sammelbereichs zu ermitteln. Das separate Computersystem kann konfiguriert sein, die Vorrichtung auf Basis der übermittelten Fangvorrichtungsinformationen und/oder der ermittelten Fangvorrichtungsinformationen zu konfigurieren.

Ebenso ist es möglich, dass die Farbe und/oder Form und/oder Größe des Sammelbereichs spezifisch für die Fangvorrichtung ist und aus der Farbe und/oder Form und/oder Größe des Sammelbereichs weitere Informationen abgeleitet werden können, wie beispielsweise um welche Art Fangvorrichtung es sich handelt, in welchem Bereich sie verwendet wird, für welche Gliederfüßer sie gedacht ist und/oder für welche Nutzpflanzen sie üblicherweise eingesetzt wird.

Ebenso ist es möglich, dass sich bei Verwendung eines Lockmittels (z.B. Pheromon) ein solches Lockmittel im Sammelbereich und/oder oberhalb des Sammelbereichs und/oder unterhalb des Sammelbereichs und/oder unmittelbarer Nähe des Sammelbereichs platziert wird, so dass es in der ersten Bildaufnahme erkennbar ist. Die Information über die Anwesenheit und/oder Nicht-Anwesenheit des Lockmittels (z.B. in Form einer Kapsel oder eines Gels oder einer Beschichtung oder dergleichen) in der Bildaufnahme kann zur Konfiguration der Vorrichtung verwendet werden.

Ebenso ist es möglich, dass die Position der Vorrichtung automatisch ermittelt wird. Aus der Position (z.B. in Form von Geokoordinaten) der Vorrichtung kann ggf. abgeleitet werden, in welchem Bereich die Vorrichtung verwendet wird, welche Nutzpflanzen in dem Bereich angebaut werden und/oder mit welchen Gliederfüßern in dem Bereich zu rechnen ist.

Die Vorrichtung kann konfiguriert sein, mit Hilfe eines GPS-Empfängers die Position der Vorrichtung zu bestimmen. Der GPS-Empfänger kann ein Bestandteil der Vorrichtung sein und/oder eine separate Einheit sein.

Ein GPS-Empfänger (GPS: Globales Positionsbestimmungssystem) ist Teil eines Satellitennavigationssystems zur Positionsbestimmung. Ein Satellitennavigationssystem basiert auf Satelliten, die mit kodierten Radiosignalen fortwährend ihre aktuelle Position und die genaue Uhrzeit ausstrahlen. Aus den Signallaufzeiten kann ein Empfänger (in dieser Beschreibung als der GPS-Empfänger bezeichnet) seine eigene Position und Geschwindigkeit berechnen. Bekannte Satellitennavigationssysteme sind beispielsweise NAVSTAR GPS, GLONASS, Galileo oder Beidou. Da sich die Abkürzung GPS (Globales Positionsbestimmungssystem) in der Umgangssprache als generische Bezeichnung für alle Satellitennavigationssysteme etabliert hat, wird in dieser Beschreibung der Begriff GPS als Sammelbezeichnung für alle Positionsbestimmungssysteme verwendet. Der Begriff "GPS-Empfänger" soll also nicht limitierend im Hinblick auf das GPS-Satellitennavigationssystem verstanden werden; er soll auch Empfänger anderer Satellitennavigationssysteme umfassen.

Die Position der Vorrichtung kann ferner aus der (Mobil-)Funkzelle, in der sich die Vorrichtung befindet, abgeleitet werden. Im Mobilfunk beruht die einfachste Art der Standortbestimmung darauf, dass die Zelle, in der sich eine Sendeeinheit befindet, bekannt ist. Da beispielsweise ein eingeschaltetes Mobilfunktelefon mit einer Basisstation in Verbindung steht, lässt sich die Position des Mobilfunktelefons zumindest einer Mobilfunkzelle (*Cell-ID*) zuweisen. Analog kann die Position der Vorrichtung umfassend eine Sendeeinheit mit der Mobilfunkzelle gleichgesetzt werden, mit der die Sendeeinheit verbunden ist. Mit Hilfe von GSM (*Global System for Mobile Communications*) kann der Standort einer Sendeeinheit auf mehrere hundert Meter genau bestimmt werden. In Städten kann der Standort auf 100 bis 500 m genau bestimmt werden; in ländlichen Gegenden erhöht sich der Radius auf 10 km oder mehr. Wird die Information über die Cell-ID mit dem TA-Parameter (TA: *Timing Advance*) kombiniert, dann kann die Genauigkeit erhöht werden. Je höher dieser Wert ist, desto weiter weg ist die Sendeeinheit von der Basisstation. Mit dem EOTD-Verfahren (EOTD: *Enhanced Observed Time Difference*) lässt sich eine Sendeeinheit noch genauer orten. Dabei werden die Laufzeitunterschiede der Signale zwischen der Sendeinheit und mehreren Empfangseinheiten bestimmt.

Weitere Möglichkeiten der Positionsbestimmung sind im Stand der Technik beschrieben (siehe z.B. DE10029137A1, DE102010041548A1, DE102012214203A1, DE102015121384A1, DE102016225886A1, US2015119086A1).

Eine weitere automatisch ermittelte Anwendungsinformation kann das Datum und/oder die Jahreszeit sein. Die Zeit kann, allein oder in Kombination mit den Geokoordinaten, Auskunft darüber geben, welche Gliederfüßer zu erwarten sind und/oder in welchem Entwicklungstand sie sich befinden.

In einer Ausführungsform der vorliegenden Offenbarung ist oder umfasst die Vorrichtung ein IoT-Gerät.

"IoT" ist die Abkürzung für "Internet of Things", was in deutscher Sprache "Internet der Dinge" bedeutet. Das Internet der Dinge (Internet of Things, IoT) bezieht sich auf ein Netz von Geräten, die mit dem Internet verbunden sind und Daten sammeln, austauschen und/oder verarbeiten können.

Ein "IoT-Gerät" ist ein eindeutig identifizierbares elektronisches Rechengerät, das konfiguriert ist, Daten über ein Netzwerk ohne die Notwendigkeit menschlicher Interaktionen von-Mensch-zu-Mensch oder von-Mensch-zu-Computer zu übertragen, zu empfangen, zu verarbeiten und/oder darauf zu reagieren. Ein "IoT-Gerät" ist üblicherweise mit Computerchips, Sensoren und Kommunikationshardware ausgestattet, die es ihm ermöglichen, Daten aus seiner Umgebung und/oder von anderen Geräten zu sammeln, zu senden und/oder zu empfangen. Ein IoT-Gerät funktioniert autonom innerhalb eines Internet-der-Dinge-Ökosystems, das vernetzte IoT-Geräte umfasst, die über das Internet und/oder andere Netzwerkinfrastrukturen kommunizieren und/oder interagieren. Ein IoT-Gerät zeichnet sich durch seine Fähigkeit aus, mit minimaler menschlicher Intervention zu operieren, wobei es eingebettete Software, Sensoren und Netzwerkkonnektivität nutzt, um seine festgelegten Funktionen auszuführen.

Das IoT-Gerät ist eine Komponente eines Systems zum Überwachen von Gliederfüßern in einem Bereich, in dem eine Nutzpflanze angebaut wird oder werden soll. Eine andere Komponente kann eine Fangvorrichtung sein.

In einer Ausführungsform der vorliegenden Offenbarung umfasst das IoT-Gerät die Kamera, die Steuer- und Berechnungseinheit, die Sendeeinheit, die Empfangseinheit, die Energieversorgungseinheit, optional eine oder mehrere Beleuchtungseinheiten und optional einen GPS-Empfänger.

In einer Ausführungsform der vorliegenden Offenbarung umfasst das IoT-Gerät ein Gehäuse, in das die elektrischen und/oder elektronischen Komponenten eingebracht sind. Das Gehäuse schützt die elektrischen/elektronischen Komponenten vor Feuchtigkeit, Verschmutzung und/oder Sonnenlicht. Das Gehäuse sorgt dafür, dass keine Gliederfüßer oder andere Organismen in das Innere des Gehäuses gelangen.

In einer Ausführungsform der vorliegenden Offenbarung umfasst das Gehäuse Verbindungsmittel, mit denen das IoT-Gerät mit einer Fangschale mechanisch verbunden werden kann. Die Verbindungsmittel sorgen für eine definierte Ausrichtung der Kamera gegenüber dem Sammelbereich der Fangvorrichtung. In einer Ausführungsform ist die mechanische Verbindung reversibel, das heißt sie kann gelöst und erneuert werden.

In einer Ausführungsform ist das IoT-Gerät so ausgeführt, dass es mit verschiedenen Typen von Fangvorrichtungen reversibel verbunden werden kann.

In einer Ausführungsform der vorliegenden Offenbarung umfasst die Vorrichtung der vorliegenden Offenbarung eine eindeutige Kennung. In einer Ausführungsform der vorliegenden Offenbarung ist die eindeutige Kennung in Form eines optisch lesbaren Codes an der Vorrichtung angebracht. Der Code kann aufgedruckt und/oder aufgeklebt und/oder eingraviert und/oder aufgestempelt und/oder mittels eines Lasers und/oder auf eine andere Weise auf die Vorrichtung aufgebracht und/oder in die Vorrichtung eingebracht oder an der Vorrichtung angebracht sein.

Der optisch lesbare Code kann ein Barcode und/oder ein 2D Code (z.B. ein QR-Code oder ein Data Matrix Code) sein.

Der optisch lesbare Code umfasst üblicherweise eine eindeutige Kennung, über die die Vorrichtung in einem Netzwerk, mit dem die Vorrichtung verbunden sein kann, eindeutig adressiert werden kann.

In einer Ausführungsform der vorliegenden Offenbarung umfasst der optisch lesbare Code einen Link (z.B. in Form eines Uniform Resource Locators (URL)) zu einer Internetseite. Ein Nutzer kann den optisch lesbaren Code mit einer Kamera eines mobilen Computersystems (z.B. ein Smartphone oder ein Tablet-Computer) erfassen. Der optisch lesbare Code kann den Nutzer über den Link auf die Internetseite leiten, wo der Nutzer die Vorrichtung registrieren und/oder konfigurieren kann und/oder die Konfiguration der Vorrichtung initiieren kann.

In einer Ausführungsform wird der Nutzer auf der Internetseite aufgefordert, Anwendungsinformationen einzugeben und/oder zu spezifizieren.

Anhand der Anwendungsinformationen kann ein separates Computersystem, das Zugriff auf die vom Nutzer eingegebenen und/oder spezifizierten Anwendungsinformationen hat, die Vorrichtung konfigurieren und/oder die Konfiguration veranlassen. Das separate Computersystem kann konfiguriert sein, über eine Netzwerkverbindung (z.B. über ein Mobilfunknetz) die Vorrichtung zu kontaktieren und die Anwendungsinformationen an die Vorrichtung zu übermitteln. Das separate Computersystem kann konfiguriert sein, die Vorrichtung über die Netzwerkverbindung auf Basis der Anwendungsinformationen zu konfigurieren. Das separate Computersystem kann konfiguriert sein, Konfigurationsinformationen über die Netzwerkverbindung an die Vorrichtung zu übermitteln, auf Basis derer die Vorrichtung sich selbst konfigurieren kann.

Die Konfiguration der Vorrichtung kann, wie bereits beschrieben, einen oder mehrere der folgenden Schritte umfassen:
- Auswählen eines oder mehrerer Modelle zum Detektieren, Lokalisieren, Identifizieren und/oder Zählen von Gliederfüßern in Bildaufnahmen des Sammelbereichs,
- Festlegen, wann und/oder wie häufig die Kamera der Vorrichtung Bildaufnahmen vom Sammelbereich erzeugt,
- Festlegen der Auflösung der Bildaufnahmen,
- Festlegen, ob und/oder wie der Sammelbereich beleuchtet wird,
- Festlegen, welcher Spektralbereich zum Beleuchten des Sammelbereichs verwendet wird,
- Festlegen, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden,
- Festlegen eines Wartungs- und/oder Reinigungsintervalls,
- Festlegen einer Fokussierung/Fokussierungsart,
- Festlegen von Kameraparametern wie beispielsweise Belichtungszeit, Blende, ISO-Wert, Weißabgleich, Belichtungskorrektur, Bildformat, Motivmodus und/oder Bildstabilisator.

Ist die Vorrichtung konfiguriert, kann sie in Betrieb genommen werden. Sie kann im Betrieb konfiguriert sein, zu definierten Zeiten und/oder in definierten Zeitabständen und/oder bei Eintreten definierter Ereignisse
(i) Bildaufnahmen vom Sammelbereich gemäß der Konfiguration zu erzeugen,
(ii) Bildaufnahmen gemäß der Konfiguration zu analysieren,
(iii) Gliederfüßer in den Bildaufnahmen gemäß der Konfiguration zu detektieren, zu lokalisieren, zu identifizieren und/oder zu zählen, und/oder
(iv) Bildaufnahmen und/oder Analyseergebnisse und/oder Mitteilungen zur Wartung und/oder Reinigung der Vorrichtung gemäß der Konfiguration an ein separates Computersystem zu übermitteln.

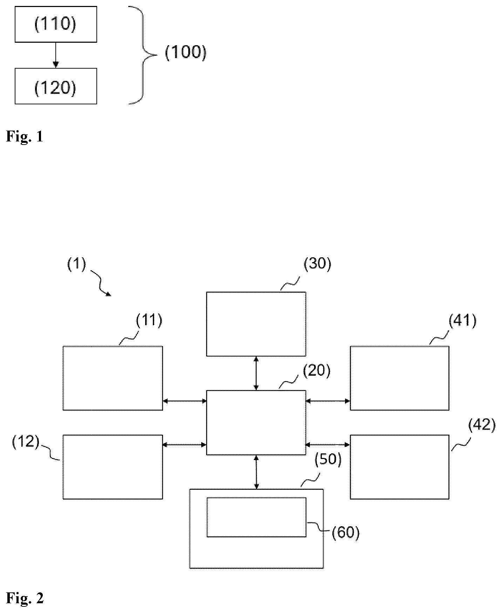

Fig. 1 zeigt beispielhaft und schematisch eine Ausführungsform des computerimplementierten Verfahrens der vorliegenden Offenbarung. Das Verfahren (100) umfasst die Schritte:
Ein weiterer Gegenstand der vorliegenden Offenbarung ist ein Computersystem.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Maus, Tastatur, Datenspeicher, Kamera, Mikrofon, Lautsprecher, Statusanzeigen etc. Auch interne Anschlüsse und Erweiterungskarten gelten in der Computertechnik als Peripherie.

Heutige Computersysteme werden häufig in Desktop-PCs, tragbare PCs, Laptops, Notebooks, Netbooks und Tablet-PCs sowie sogenannte Handhelds (z. B. Smartphone) unterteilt; alle diese Systeme können für die Durchführung der Erfindung verwendet werden.

Der Begriff "Computer" sollte weit ausgelegt werden und jede Art von elektronischem Gerät mit Datenverarbeitungsfähigkeiten umfassen, einschließlich, als nicht einschränkendes Beispiel, Personalcomputer, Server, eingebettete Kerne, Kommunikationsgeräte, Prozessoren (z. B. digitaler Signalprozessor (DSP), Mikrocontroller, feldprogrammierbares Gate-Array (FPGA), anwendungsspezifischer integrierter Schaltkreis (ASIC) usw.) und andere elektronische Rechengeräte.

Der Begriff "verarbeiten", wie er oben verwendet wird, soll jede Art von Berechnung oder Manipulation oder Umwandlung von Daten umfassen, die als physikalische, z.B. elektronische, Phänomene dargestellt werden und z.B. in Registern und/oder Speichern mindestens eines Computers oder Prozessors auftreten oder gespeichert werden können. Der Begriff "Prozessor" umfasst eine einzelne Verarbeitungseinheit oder eine Vielzahl verteilter oder entfernter solcher Einheiten.

Das Computersystem der vorliegenden Offenbarung kann ein Bestandteil der Vorrichtung der vorliegenden Offenbarung sein. Das Computersystem kann ein von der Vorrichtung unabhängiges, separates Computersystem sein, das mit der Vorrichtung z.B. über ein Netzwerk verbunden werden kann.

Das Computersystem umfasst
- eine Empfangseinheit
- und eine Steuereinheit,
- wobei die Empfangseinheit konfiguriert ist, Anwendungsinformationen betreffend eine Vorrichtung zum Überwachen von Gliederfüßern in einem Bereich, in dem Nutzpflanzen angebaut werden, zu empfangen, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- wobei die Steuereinheit konfiguriert ist, die Vorrichtung auf Basis der Anwendungsinformationen zu konfigurieren und/oder eine Konfiguration der Vorrichtung zu veranlassen.

Fig. 2 zeigt beispielhaft und schematisch eine Ausführungsform des Computersystems der vorliegenden Offenbarung.

Das Computersystem (1) umfasst eine Verarbeitungseinheit (20) (engl. *processing unit*) und einen Speicher (50).

Die Verarbeitungseinheit (20) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die im Speicher (50) gespeichert sein können.

Der Speicher (50) kann eine gewöhnliche Computerhardware sein, die in der Lage ist, Informationen wie z.B. digitale Bildaufnahmen, Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher oder eine Kombination der oben genannten.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Kamera, anderen Computersystemen, Netzwerken, Datenspeichern oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) umfassen. Eine Anzeige (30) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen (11, 12) sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und/oder Kameras und dergleichen umfassen.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

Gegenstand der vorliegenden Erfindung ist auch ein Computerprogramm. Ein solches Computerprogramm kann auf einem nichtflüchtigen Datenträger wie beispielsweise einer CD, einer DVD, einem USB-Stick oder einem anderen Medium zum Speichern von Daten gespeichert sein.

Das Computerprogramm kann in einem App-Store und/oder auf einer Webseite des Internets zum Herunterladen angeboten werden.

Das Computerprogramm veranlasst ein Computersystem, in dessen Arbeitsspeicher es geladen ist, folgende Schritte auszuführen:
- Empfangen von Anwendungsinformationen betreffend eine Vorrichtung zum Überwachen von Gliederfüßern in einem Bereich, in dem Nutzpflanzen angebaut werden, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- Konfigurieren der Vorrichtung auf Basis der Anwendungsinformationen.

## Patentansprüche

1. Computer-implementiertes Verfahren zum Konfigurieren einer Vorrichtung zum Überwachen von Gliederfüßern in einem Bereich, in dem Nutzpflanzen angebaut werden, umfassend:
- Empfangen von Anwendungsinformationen betreffend die Vorrichtung zum Überwachen von Gliederfüßern, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- Konfigurieren der Vorrichtung auf Basis der Anwendungsinformationen,
**dadurch gekennzeichnet, dass** das Konfigurieren der Vorrichtung umfasst:
- Auswählen eines Modells zum Detektieren, Lokalisieren, Identifizieren und/oder Zählen von Gliederfüßern auf Basis der Anwendungsinformationen.

2. Verfahren gemäß Anspruch 1, wobei die Anwendungsinformationen
- Gliederfüßerinformationen umfassen, wobei die Gliederfüßerinformationen Gliederfüßer spezifizieren, die in dem Bereich vorkommen, und/oder
- Gliederfüßerinformationen umfassen, wobei die Gliederfüßerinformationen Gliederfüßer spezifizieren, die Schädlinge der Nutzpflanzen sind, und/oder
- Nutzpflanzeninformationen umfassen, wobei die Nutzpflanzeninformationen die Nutzpflanzen spezifizieren, die in dem Bereich eingebaut werden, und/oder
- Fangvorrichtungsinformationen umfassen, wobei die Fangvorrichtungsinformationen die Fangvorrichtung spezifizieren.

3. Verfahren gemäß Anspruch 2, wobei die Fangvorrichtungsinformationen spezifizieren,
- ob die Fangvorrichtung eine Klebefalle oder eine mit einer Flüssigkeit gefüllte Fangschale umfasst, und/oder
- ob die Fangvorrichtung mit einem Lockmittel ausgestattet ist und/oder mit welchem Lockmittel die Fangvorrichtung ausgestattet ist, und/oder
- in welcher Farbe ein Sammelbereich für Gliederfüßer der Fangvorrichtung gestaltet ist, und/oder
- wie weit der Sammelbereich von einem Objektiv einer Kamera und/oder einem Bildsensor der Kamera entfernt ist, und/oder
- wie groß der Sammelbereich ist, und/oder
- welche Form der Sammelbereich aufweist, und/oder
- mit welcher Flüssigkeit die als Fangschale ausgestaltete Fangvorrichtung gefüllt ist, und/oder
- ob und/oder welchen Zusatz die mit Flüssigkeit in der Fangschale umfasst.

4. Verfahren gemäß einem der Ansprüche 1 bis 3, wobei die Anwendungsinformationen Bereichsinformationen umfassen, wobei die Bereichsinformationen den Bereich spezifizieren und/oder spezifizieren, ob die Nutzpflanzen im Freien, in einem Folientunnel oder in einem Gewächshaus angebaut werden.

5. Verfahren gemäß einem der Ansprüche 1 bis 4, wobei die Fangvorrichtung einen Sammelbereich für Gliederfüßer umfasst, wobei die Vorrichtung eine Kamera zum Erzeugen von Bildaufnahmen des Sammelbereichs umfasst, wobei das Konfigurieren der Vorrichtung umfasst:
- Festlegen, zu welchen Zeitpunkten und/oder in welchen Zeitabständen die Kamera der Vorrichtung Bildaufnahmen vom Sammelbereich erzeugt.

6. Verfahren gemäß einem der Ansprüche 1 bis 5, wobei die Fangvorrichtung einen Sammelbereich für Gliederfüßer umfasst, wobei die Vorrichtung eine Kamera zum Erzeugen von Bildaufnahmen des Sammelbereichs umfasst, wobei das Konfigurieren der Vorrichtung umfasst:
- Festlegen einer Auflösung für die Bildaufnahmen des Sammelbereichs.

7. Verfahren gemäß einem der Ansprüche 1 bis 6, wobei die Fangvorrichtung einen Sammelbereich für Gliederfüßer umfasst, wobei die Vorrichtung eine Beleuchtungseinheit zum Beleuchten des Sammelbereichs umfasst, wobei das Konfigurieren der Vorrichtung umfasst:
- Festlegen eines Spektralbereichs und/oder einer Intensität von elektromagnetischer Strahlung, die von der Beleuchtungseinheit zum Beleuchten des Sammelbereichs emittiert wird.

8. Verfahren gemäß einem der Ansprüche 1 bis 7, wobei die Fangvorrichtung einen Sammelbereich für Gliederfüßer umfasst, wobei die Vorrichtung eine Kamera zum Erzeugen von Bildaufnahmen des Sammelbereichs umfasst, wobei die Vorrichtung eine oder mehrere Beleuchtungseinheiten zum Beleuchten des Sammelbereichs umfasst, wobei das Konfigurieren der Vorrichtung umfasst:
- Festlegen, ob eine Beleuchtungseinheit bei der Erzeugung von Bildaufnahmen eingeschaltet wird, welche Beleuchtungseinheit eingeschaltet wird, wann die eine oder mehrere Beleuchtungseinheiten eingeschaltet wird/werden, und zu welchen Zeitpunkten und/oder in welchen Zeitabständen die eine oder mehreren Beleuchtungseinheiten eingeschaltet wird/werden.

9. Verfahren gemäß einem der Ansprüche 1 bis 8, wobei das Konfigurieren der Vorrichtung umfasst:
- Festlegen eines Wartungs- und/oder Reinigungsintervalls für eine oder mehrere Komponenten der Vorrichtung.

10. Verfahren gemäß einem der Ansprüche 1 bis 9, wobei die Fangvorrichtung einen Sammelbereich für Gliederfüßer umfasst, wobei die Vorrichtung eine Kamera zum Erzeugen von Bildaufnahmen des Sammelbereichs umfasst, wobei das Konfigurieren der Vorrichtung umfasst:
- Festlegen einer Fokussierung, einer Fokussierungsart, einer Belichtungszeit, einer Blende, eines ISO-Werts, eines Weißabgleich, einer Belichtungskorrektur, eines Bildformats, eines Motivmodus und/oder eines Bildstabilisators.

11. Verfahren gemäß einem der Ansprüche 1 bis 10, wobei die Anwendungsinformationen von einem Nutzer und/oder automatisch ermittelt werden.

12. Verfahren gemäß einem der Ansprüche 1 bis 11, wobei das Empfangen von Anwendungsinformationen umfasst:
- Empfangen der Anwendungsinformationen über ein Netzwerk mittels eines separaten Computersystems,
wobei das Konfigurieren der Vorrichtung umfasst:
- Konfigurieren der Vorrichtung über ein Netzwerk mittels des separaten Computersystems und/oder Veranlassen des Konfigurierens über ein Netzwerk mittels des separaten Computersystems.

13. Computersystem (1) umfassend
- eine Empfangseinheit
- und eine Steuereinheit,
- wobei die Empfangseinheit konfiguriert ist, Anwendungsinformationen betreffend eine Vorrichtung zum Überwachen von Gliederfüßern in einem Bereich, in dem Nutzpflanzen angebaut werden, zu empfangen, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- wobei die Steuereinheit konfiguriert ist, die Vorrichtung auf Basis der Anwendungsinformationen zu konfigurieren und/oder eine Konfiguration der Vorrichtung zu veranlassen,
**dadurch gekennzeichnet, dass** das Konfigurieren der Vorrichtung umfasst:
- Auswählen eines Modells zum Detektieren, Lokalisieren, Identifizieren und/oder Zählen von Gliederfüßern auf Basis der Anwendungsinformationen.

14. Nicht-flüchtiges computerlesbares Speichermedium, auf dem ein Computerprogramm (60) gespeichert ist, das, wenn es von einem Computersystem (1) ausgeführt wird, das Computersystem (1) veranlasst, folgende Schritte auszuführen:
- Empfangen von Anwendungsinformationen betreffend eine Vorrichtung zum Überwachen von Gliederfüßern in einem Bereich, in dem Nutzpflanzen angebaut werden, wobei die Vorrichtung eine Fangvorrichtung für Gliederfüßer umfasst, wobei die Anwendungsinformationen die Nutzpflanzen, den Bereich, die Gliederfüßer und/oder die Fangvorrichtung spezifizieren,
- Konfigurieren der Vorrichtung auf Basis der Anwendungsinformationen,
**dadurch gekennzeichnet, dass** das Konfigurieren der Vorrichtung umfasst:
- Auswählen eines Modells zum Detektieren, Lokalisieren, Identifizieren und/oder Zählen von Gliederfüßern auf Basis der Anwendungsinformationen.

## Claims

1. A computer-implemented method for configuring a device for monitoring arthropods in an area in which crops are cultivated, comprising:
• receiving application information concerning the device for monitoring arthropods, wherein the device comprises a trapping device for arthropods, wherein the application information specifies the crops, the area, the arthropods and/or the trapping device,
• configuring the device on the basis of the application information,
**characterized in that** the configuring of the device comprises:
• selecting a model for detecting, localizing, identifying and/or counting arthropods on the basis of the application information.

2. The method according to claim 1, wherein the application information comprises:
• arthropod information, wherein the arthropod information specifies arthropods that occur in the area, and/or
• arthropod information, wherein the arthropod information specifies arthropods that are pests of the crops, and/or
• crop information, wherein the crop information specifies the crops that are cultivated in the area, and/or
• trapping device information, wherein the trapping device information specifies the trapping device.

3. The method according to claim 2, wherein the trapping device information specifies:
• whether the trapping device comprises an adhesive trap or a catching bowl filled with a liquid, and/or
• whether the trapping device is equipped with an attractant and/or with which attractant the trapping device is equipped, and/or
• in which colour a collection area for arthropods of the trapping device is designed, and/or
• how far the collection area is from a lens of a camera and/or an image sensor of the camera, and/or
• how large the collection area is, and/or
• which shape the collection area has, and/or
• with which liquid the trapping device designed as a catching bowl is filled, and/or
• whether and/or which additive the liquid in the catching bowl comprises.

4. The method according to any one of claims 1 to 3, wherein the application information comprises area information, wherein the area information specifies the area and/or specifies whether the crops are cultivated outdoors, in a polytunnel or in a greenhouse.

5. The method according to any one of claims 1 to 4, wherein the trapping device comprises a collection area for arthropods, wherein the device comprises a camera for generating images of the collection area, wherein the configuring of the device comprises:
• determining at which points in time and/or at which time intervals the camera of the device generates images of the collection area.

6. The method according to any one of claims 1 to 5, wherein the trapping device comprises a collection area for arthropods, wherein the device comprises a camera for generating images of the collection area, wherein the configuring of the device comprises:
• determining a resolution for the images of the collection area.

7. The method according to any one of claims 1 to 6, wherein the trapping device comprises a collection area for arthropods, wherein the device comprises an illumination unit for illuminating the collection area, wherein the configuring of the device comprises:
• determining a spectral range and/or an intensity of electromagnetic radiation emitted by the illumination unit for illuminating the collection area.

8. The method according to any one of claims 1 to 7, wherein the trapping device comprises a collection area for arthropods, wherein the device comprises a camera for generating images of the collection area, wherein the device comprises one or more illumination units for illuminating the collection area, wherein the configuring of the device comprises:
• determining whether an illumination unit is switched on during the generation of images, which illumination unit is switched on, when the one or more illumination units is/are switched on, and at which points in time and/or at which time intervals the one or more illumination units is/are switched on.

9. The method according to any one of claims 1 to 8, wherein the configuring of the device comprises:
• determining a maintenance and/or cleaning interval for one or more components of the device.

10. The method according to any one of claims 1 to 9, wherein the trapping device comprises a collection area for arthropods, wherein the device comprises a camera for generating images of the collection area, wherein the configuring of the device comprises:
• determining a focusing, a focusing type, an exposure time, an aperture, an ISO value, a white balance, an exposure correction, an image format, a scene mode and/or an image stabilizer.

11. The method according to any one of claims 1 to 10, wherein the application information is determined by a user and/or automatically.

12. The method according to any one of claims 1 to 11, wherein the receiving of application information comprises:
• receiving the application information via a network by means of a separate computer system,
wherein the configuring of the device comprises:
• configuring the device via a network by means of the separate computer system and/or initiating the configuring via a network by means of the separate computer system.

13. A computer system (1) comprising:
• a receiving unit
• and a control unit,
• wherein the receiving unit is configured to receive application information concerning a device for monitoring arthropods in an area in which crops are cultivated, wherein the device comprises a trapping device for arthropods, wherein the application information specifies the crops, the area, the arthropods and/or the trapping device,
• wherein the control unit is configured to configure the device on the basis of the application information and/or to initiate a configuration of the device,
**characterized in that** the configuring of the device comprises:
• selecting a model for detecting, localizing, identifying and/or counting arthropods on the basis of the application information.

14. A non-transitory computer-readable storage medium on which a computer program (60) is stored which, when executed by a computer system (1), causes the computer system (1) to carry out the following steps:
• receiving application information concerning a device for monitoring arthropods in an area in which crops are cultivated, wherein the device comprises a trapping device for arthropods, wherein the application information specifies the crops, the area, the arthropods and/or the trapping device,
• configuring the device on the basis of the application information,
**characterized in that** the configuring of the device comprises:
• selecting a model for detecting, localizing, identifying and/or counting arthropods on the basis of the application information.

## Revendications

1. Procédé mis en œuvre par ordinateur pour configurer un dispositif de surveillance d'arthropodes dans une zone dans laquelle des plantes cultivées sont cultivées, comprenant :
• la réception d'informations d'application concernant le dispositif de surveillance d'arthropodes, le dispositif comprenant un dispositif de piégeage pour arthropodes, les informations d'application spécifiant les plantes cultivées, la zone, les arthropodes et/ou le dispositif de piégeage,
• la configuration du dispositif sur la base des informations d'application,
**caractérisé en ce que** la configuration du dispositif comprend :
• la sélection d'un modèle pour détecter, localiser, identifier et/ou dénombrer des arthropodes sur la base des informations d'application.

2. Procédé selon la revendication 1, dans lequel les informations d'application comprennent :
• des informations sur les arthropodes, les informations sur les arthropodes spécifiant des arthropodes qui sont présents dans la zone, et/ou
• des informations sur les arthropodes, les informations sur les arthropodes spécifiant des arthropodes qui sont des ravageurs des plantes cultivées, et/ou
• des informations sur les plantes cultivées, les informations sur les plantes cultivées spécifiant les plantes cultivées qui sont cultivées dans la zone, et/ou
• des informations sur le dispositif de piégeage, les informations sur le dispositif de piégeage spécifiant le dispositif de piégeage.

3. Procédé selon la revendication 2, dans lequel les informations sur le dispositif de piégeage spécifient :
• si le dispositif de piégeage comprend un piège adhésif ou un bac de capture rempli d'un liquide, et/ou
• si le dispositif de piégeage est équipé d'un attractif et/ou de quel attractif le dispositif de piégeage est équipé, et/ou
• dans quelle couleur une zone de collecte pour arthropodes du dispositif de piégeage est conçue, et/ou
• à quelle distance la zone de collecte se trouve d'un objectif d'une caméra et/ou d'un capteur d'image de la caméra, et/ou
• quelle est la taille de la zone de collecte, et/ou
• quelle forme présente la zone de collecte, et/ou
• de quel liquide le dispositif de piégeage conçu comme bac de capture est rempli, et/ou
• si et/ou quel additif le liquide dans le bac de capture comprend.

4. Procédé selon l'une quelconque des revendications 1 à 3, dans lequel les informations d'application comprennent des informations de zone, les informations de zone spécifiant la zone et/ou spécifiant si les plantes cultivées sont cultivées en plein air, dans un tunnel en film plastique ou dans une serre.

5. Procédé selon l'une quelconque des revendications 1 à 4, dans lequel le dispositif de piégeage comprend une zone de collecte pour arthropodes, dans lequel le dispositif comprend une caméra pour générer des captures d'images de la zone de collecte, dans lequel la configuration du dispositif comprend :
• la détermination des instants et/ou des intervalles de temps auxquels la caméra du dispositif génère des captures d'images de la zone de collecte.

6. Procédé selon l'une quelconque des revendications 1 à 5, dans lequel le dispositif de piégeage comprend une zone de collecte pour arthropodes, dans lequel le dispositif comprend une caméra pour générer des captures d'images de la zone de collecte, dans lequel la configuration du dispositif comprend :
• la détermination d'une résolution pour les captures d'images de la zone de collecte.

7. Procédé selon l'une quelconque des revendications 1 à 6, dans lequel le dispositif de piégeage comprend une zone de collecte pour arthropodes, dans lequel le dispositif comprend une unité d'éclairage pour éclairer la zone de collecte, dans lequel la configuration du dispositif comprend :
• la détermination d'une plage spectrale et/ou d'une intensité de rayonnement électromagnétique émis par l'unité d'éclairage pour éclairer la zone de collecte.

8. Procédé selon l'une quelconque des revendications 1 à 7, dans lequel le dispositif de piégeage comprend une zone de collecte pour arthropodes, dans lequel le dispositif comprend une caméra pour générer des captures d'images de la zone de collecte, dans lequel le dispositif comprend une ou plusieurs unités d'éclairage pour éclairer la zone de collecte, dans lequel la configuration du dispositif comprend :
• la détermination si une unité d'éclairage est allumée lors de la génération de captures d'images, quelle unité d'éclairage est allumée, quand la ou les plusieurs unités d'éclairage est/sont allumée(s), et à quels instants et/ou à quels intervalles de temps la ou les plusieurs unités d'éclairage est/sont allumée(s).

9. Procédé selon l'une quelconque des revendications 1 à 8, dans lequel la configuration du dispositif comprend :
• la détermination d'un intervalle de maintenance et/ou de nettoyage pour un ou plusieurs composants du dispositif.

10. Procédé selon l'une quelconque des revendications 1 à 9, dans lequel le dispositif de piégeage comprend une zone de collecte pour arthropodes, dans lequel le dispositif comprend une caméra pour générer des captures d'images de la zone de collecte, dans lequel la configuration du dispositif comprend :
• la détermination d'une mise au point, d'un type de mise au point, d'un temps d'exposition, d'une ouverture, d'une valeur ISO, d'une balance des blancs, d'une correction d'exposition, d'un format d'image, d'un mode scène et/ou d'un stabilisateur d'image.

11. Procédé selon l'une quelconque des revendications 1 à 10, dans lequel les informations d'application sont déterminées par un utilisateur et/ou automatiquement.

12. Procédé selon l'une quelconque des revendications 1 à 11, dans lequel la réception d'informations d'application comprend :
• la réception des informations d'application via un réseau au moyen d'un système informatique séparé,
dans lequel la configuration du dispositif comprend :
• la configuration du dispositif via un réseau au moyen du système informatique séparé et/ou le déclenchement de la configuration via un réseau au moyen du système informatique séparé.

13. Système informatique (1) comprenant :
• une unité de réception
• et une unité de commande,
• l'unité de réception étant configurée pour recevoir des informations d'application concernant un dispositif de surveillance d'arthropodes dans une zone dans laquelle des plantes cultivées sont cultivées, le dispositif comprenant un dispositif de piégeage pour arthropodes, les informations d'application spécifiant les plantes cultivées, la zone, les arthropodes et/ou le dispositif de piégeage,
• l'unité de commande étant configurée pour configurer le dispositif sur la base des informations d'application et/ou pour provoquer une configuration du dispositif,
**caractérisé en ce que** la configuration du dispositif comprend :
• la sélection d'un modèle pour détecter, localiser, identifier et/ou dénombrer des arthropodes sur la base des informations d'application.

14. Support de stockage non transitoire lisible par ordinateur sur lequel est stocké un programme informatique (60) qui, lorsqu'il est exécuté par un système informatique (1), amène le système informatique (1) à exécuter les étapes suivantes :
• la réception d'informations d'application concernant un dispositif de surveillance d'arthropodes dans une zone dans laquelle des plantes cultivées sont cultivées, le dispositif comprenant un dispositif de piégeage pour arthropodes, les informations d'application spécifiant les plantes cultivées, la zone, les arthropodes et/ou le dispositif de piégeage,
• la configuration du dispositif sur la base des informations d'application,
**caractérisé en ce que** la configuration du dispositif comprend :
• la sélection d'un modèle pour détecter, localiser, identifier et/ou dénombrer des arthropodes sur la base des informations d'application.
